(19) Europäisches Patentamt
European Patent Office
Office européen des brevets

(11) **EP 3 759 353 B1**

(12) **FASCICULE DE BREVET EUROPEEN**

(45) Date de publication et mention
de la délivrance du brevet:
**13.10.2021 Bulletin 2021/41**

(51) Int Cl.:
*F04D 29/32* (2006.01)     *F04D 29/58* (2006.01)
*F01D 5/00* (2006.01)

(21) Numéro de dépôt: **19717913.8**

(22) Date de dépôt: **16.04.2019**

(86) Numéro de dépôt international:
**PCT/EP2019/059847**

(87) Numéro de publication internationale:
**WO 2019/214915 (14.11.2019 Gazette 2019/46)**

(54) **TURBOMACHINE COMPORTANT UN CIRCUIT DE PRELEVEMENT D'AIR**

TURBINENTRIEBWERK MIT EINEM LUFTSAMMELKREISLAUF

TURBINE-ENGINE INCLUDING AN AIR COLLECTION CIRCUIT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.05.2018 FR 1853971**

(43) Date de publication de la demande:
**06.01.2021 Bulletin 2021/01**

(73) Titulaire: **SAFRAN AIRCRAFT ENGINES
75015 Paris (FR)**

(72) Inventeurs:
• **SCHOLTES, Christophe
77550 MOISSY-CRAMAYEL (FR)**
• **DANTENY, Ulysse, Jacques, Bernard
77550 MOISSY-CRAMAYEL (FR)**

(74) Mandataire: **Argyma
14 Boulevard de Strasbourg
31000 Toulouse (FR)**

(56) Documents cités:
EP-A1- 1 262 630          EP-A1- 3 156 592
EP-A1- 3 231 994          DE-T5-112015 002 664
US-A1- 2017 175 557

## Description

### DOMAINE TECHNIQUE GENERAL ET ART ANTERIEUR

La présente invention concerne une turbomachine comportant un circuit de prélèvement d'air.

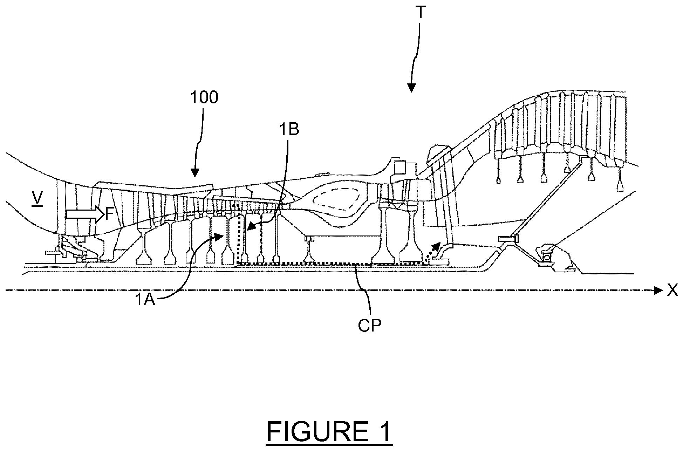

De manière connue, en référence à la figure 1, une turbomachine T s'étend longitudinalement selon un axe X et permet la circulation d'un flux d'air F d'amont en aval dans une veine principale V de forme annulaire. Par la suite, les termes « amont » et « aval » sont définis par rapport à l'axe X orienté d'amont en aval. Les termes « longitudinal » et « radial » sont définis par rapport à l'axe X, le terme radial étant plus précisément défini dans un plan transversal à l'axe X. De même, les termes « intérieur » et « extérieur » sont définis radialement par rapport à l'axe X.

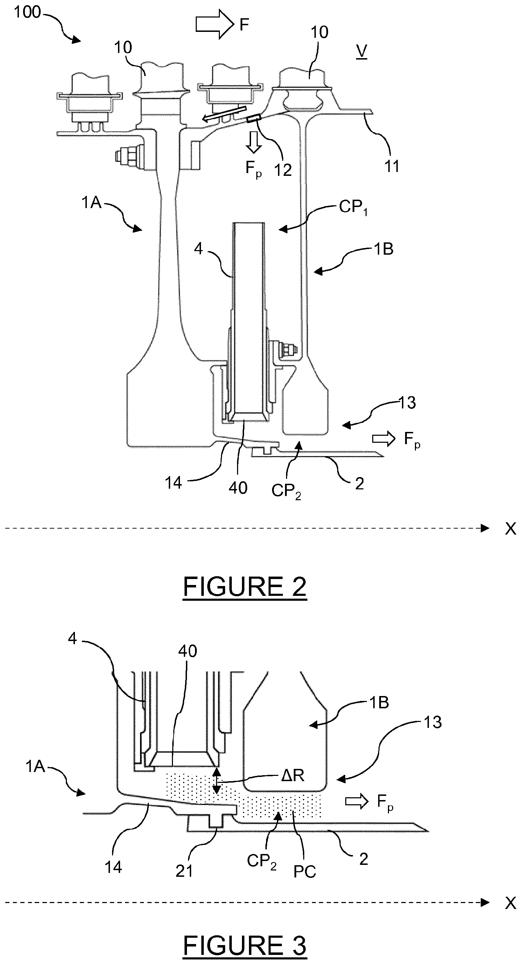

La turbomachine T comporte un compresseur 100, une chambre de combustion et une turbine dans lesquels circule le flux d'air F d'amont en aval. Le compresseur 100 comporte de manière connue une pluralité de disques de compresseur. Comme illustré à la figure 2, la turbomachine comporte un circuit de prélèvement d'air formé entre un disque de compresseur amont 1A et un disque de compresseur aval 1B. Chaque disque de compresseur 1A, 1B comporte des aubes 10 s'étendant radialement pour accélérer/comprimer le flux d'air F dans la veine principale V. Le disque de compresseur aval 1B comporte une virole cylindrique 11 reliée au disque de compresseur amont 1A. La virole cylindrique 11 comporte une pluralité d'orifices d'entrée 12 de manière à ce qu'un flux d'air prélevé Fp, issu du flux d'air F de la veine principale V, circule intérieurement à la virole cylindrique 11 entre le disque de compresseur amont 1A et le disque de compresseur aval 1B.

Le disque de compresseur aval 1B comporte un alésage central 13 dans lequel s'étend un corps cylindrique 2 selon l'axe X, connu de l'homme du métier sous la désignation de « tirant », qui est relié au disque de compresseur amont 1A comme représenté à la figure 2. Le corps cylindrique 2 est entrainé en rotation autour de l'axe X et permet d'entrainer en rotation les disques de compresseur 1A, 1B du compresseur 100.

Le circuit de prélèvement d'air comporte, d'une part, une portion radiale $CP_1$ s'étendant entre le disque de compresseur amont 1A et le disque de compresseur aval 1B et, d'autre part, une portion longitudinale $CP_2$ s'étendant entre le corps cylindrique 2 et l'alésage central 13 du disque de compresseur aval 1B. De manière connue, le flux d'air prélevé Fp circule dans la portion radiale $CP_1$ de manière centripète puis longitudinalement vers l'aval dans la portion longitudinale $CP_2$ pour être acheminé, par exemple, à la turbine de la turbomachine afin de permettre un refroidissement ou une purge de certaines cavités. Un tel circuit de prélèvement d'air est connu de l'homme du métier sous la désignation de prélèvement « sous disque ».

En pratique, dans la portion radiale $CP_1$, le flux d'air prélevé Fp est analogue à un écoulement connu de l'homme du métier sous la désignation « free vortex ». Le flux d'air prélevé Fp est libre d'accélérer et subit une forte accélération tangentielle et une forte perte de charge associée.

Pour éliminer cet inconvénient, il a été proposé de monter des tubes de prélèvement d'air 4 dans la portion radiale $CP_1$ du circuit de prélèvement d'air pour guider le flux d'air prélevé Fp et lui imposer une vitesse tangentielle égale à celle des disques de compresseur 1A, 1B. De tels tubes de prélèvement d'air 4 sont par exemple enseignés par la demande de brevet EP1262630A1.

De manière connue, comme illustré à la figure 2, un tube de prélèvement d'air 4 comporte une extrémité intérieure 40 qui est décalée radialement par rapport à l'alésage central 13 du disque de compresseur aval 1B afin de réserver suffisamment d'espace pour la liaison entre le corps cylindrique 2 et le disque de compresseur amont 1A. Dans cet exemple, en référence à la figure 3, le disque de compresseur amont 1A comporte un organe de liaison 14 s'étendant vers l'aval et coopérant avec un organe de liaison 21 du corps cylindrique 2. Du fait de ce décalage radial $\Delta R$, lorsque le flux d'air prélevé Fp sort d'un tube de prélèvement d'air 4, celui-ci est libre d'accélérer tangentiellement avant d'atteindre la portion longitudinale $CP_2$ du circuit de prélèvement, ce qui induit des pertes de charges importantes PC comme illustré à la figure 3. En pratique, la vitesse tangentielle du flux d'air prélevé Fp peut être jusqu'à deux fois plus élevée que la vitesse tangentielle du disque de compresseur aval 1B.

Afin d'éliminer cet inconvénient, une solution immédiate serait de supprimer le décalage radial $\Delta R$ mais cela imposerait de modifier de manière importante la forme du circuit de prélèvement d'air pour un résultat incertain.

Un des objectifs de la présente invention est de réaliser un prélèvement d'air dans une turbomachine qui permette de réduire les pertes de charge tout en limitant les modifications structurelles du circuit de prélèvement d'air.

De manière incidente, on connait dans l'art antérieur le document EP231994A1 qui comporte un compresseur axial configuré pour prélever de l'air dans une veine principale et l'injecter dans un circuit de refroidissement. Un tel document ne concerne pas une architecture comprenant un disque de compresseur aval comportant un alésage central dans lequel circule de l'air. De plus, un tel document ne vise pas un tube de prélèvement d'air pour acheminer de l'air jusqu'à l'alésage central.

### PRESENTATION GENERALE DE L'INVENTION

A cet effet, l'invention concerne une turbomachine s'étendant longitudinalement selon un axe X et comportant une veine principale dans laquelle circule un flux d'air d'amont en aval, la turbomachine comportant un compresseur comportant au moins un disque de compresseur amont, au moins un disque de compresseur aval et un circuit de prélèvement d'air d'un flux d'air prélevé dans la veine principale, le disque de compresseur aval comportant un alésage central et une virole cylindrique comprenant une pluralité d'orifices d'entrée du circuit de prélèvement d'air, la turbomachine comportant un corps cylindrique s'étendant dans l'alésage central du disque de compresseur aval et relié solidairement au disque de compresseur amont, le circuit de prélèvement d'air comportant une portion radiale, s'étendant entre le disque de compresseur amont et le disque de compresseur aval, dans laquelle est monté au moins un tube de prélèvement d'air et une portion longitudinale s'étendant entre le corps cylindrique et l'alésage central.

L'invention est remarquable en ce que la turbomachine comporte une pluralité d'ailettes s'étendant dans la portion longitudinale du circuit de prélèvement d'air pour entraîner en rotation le flux d'air prélevé.

Grâce à l'invention, les ailettes permettent de contrôler la vitesse tangentielle du flux d'air prélevé. Toute accélération incontrôlée du flux d'air prélevé est ainsi évitée, ce qui permet de réduire les pertes de charge. La vitesse de rotation angulaire des ailettes est avantageusement égale à celle des disques de compresseur. L'ajout d'ailettes est avantageux étant donné qu'il n'impacte que faiblement la structure du circuit de prélèvement d'air. En outre, la masse de telles ailettes est réduite. Les ailettes sont entraînées en rotation autour de l'axe X de la turbomachine.

De manière avantageuse, les ailettes remplissent une fonction analogue au tube de prélèvement d'air monté dans la portion radiale du circuit de prélèvement d'air mais possèdent une structure différente pour permettre une intégration dans une portion longitudinale du circuit de prélèvement d'air. L'intégration d'ailettes nécessite une compréhension pointue des mécanismes physiques d'un circuit de prélèvement d'air mais nécessite également une démarche inventive.

De manière préférée, le corps cylindrique comporte la pluralité d'ailettes. Les ailettes sont ainsi solidaires en rotation du corps cylindrique. Ainsi, les ailettes permettent de contrôler la vitesse tangentielle du flux d'air prélevé. La vitesse de rotation angulaire des ailettes est avantageusement égale à celle des disques de compresseur. La formation d'ailettes sur le corps cylindrique est avantageuse étant donné qu'elle n'impacte pas les disques de compresseur. De plus, des ailettes peuvent avantageusement être ajoutées sur un corps cylindrique existant dont la structure est plus simple.

Selon un aspect préféré, la portion longitudinale du circuit de prélèvement d'air ayant une hauteur radiale déterminée H, chaque ailette possède une hauteur radiale Ha définie selon la formule suivante : $Ha > 0.8 * H$

Une telle caractéristique permet d'éviter la formation d'un jeu radial important dans lequel le flux d'air prélevé est libre d'accélérer tangentiellement. Une hauteur radiale supérieure à 80% permet une régulation optimale de la vitesse tangentielle et une limitation efficace des pertes de charge.

De préférence, la pluralité d'orifices d'entrée définit une section globale d'entrée S1, la portion longitudinale du circuit de prélèvement d'air possède une section de passage d'air S2 supérieure à deux fois la section d'entrée S1, c'est-à-dire, $S2 > 2 * S1$.

Un tel rapport de sections permet de limiter les pertes de charges induites par la circulation du flux d'air prélevé entre les ailettes. Autrement dit, aucune perte de charge supplémentaire n'est induite par l'ajout des ailettes.

De manière préférée, chaque disque de compresseur comporte des aubes radiales s'étendant dans la veine principale pour accélérer le flux d'air.

De préférence, la pluralité d'ailettes est répartie à la périphérie du corps cylindrique. Ainsi, la vitesse du flux d'air prélevé est contrôlée de manière homogène par les ailettes.

Selon un aspect de l'invention, le corps cylindrique comporte un organe de liaison relié au disque de compresseur amont. De préférence, la pluralité d'ailettes s'étend en aval de l'organe de liaison du corps cylindrique. De manière préférée, le disque de compresseur amont comportant un organe de liaison relié au corps cylindrique, la pluralité d'ailettes s'étend sensiblement dans le prolongement de l'organe de liaison du disque de compresseur amont. Ainsi, les pertes de charge induites par la liaison entre le corps cylindrique et le disque de compresseur amont sont avantageusement réduites par les ailettes.

De manière préférée, le tube de prélèvement d'air comporte une extrémité radialement intérieure décalée radialement vers l'extérieur par rapport à l'alésage central du disque de compresseur aval. Ainsi, les ailettes permettent de guider le flux d'air prélevé de manière optimale suite à son accélération tangentielle en sortie du tube de prélèvement d'air.

L'invention concerne également un procédé de prélèvement d'un flux d'air dans une turbomachine telle que présentée précédemment, le procédé comprenant :

- une étape de circulation d'un flux d'air prélevé de la veine principale à la portion radiale du circuit de prélèvement d'air,
- une étape de circulation du flux d'air prélevé de la portion radiale du circuit de prélèvement d'air à la portion longitudinale du circuit de prélèvement d'air et
- une étape d'entrainement en rotation du flux d'air prélevé dans la portion longitudinale du circuit de prélèvement d'air par la pluralité d'ailettes.

De manière préférée, le flux d'air prélevé est entraîné en rotation à la vitesse de rotation du corps cylindrique.

## PRESENTATION DES FIGURES

L'invention sera mieux comprise à la lecture de la description qui va suivre, donnée uniquement à titre d'exemple, et se référant aux dessins annexés sur lesquels :

- la figure 1 est une représentation en coupe longitudinale d'une turbomachine comportant un circuit de prélèvement d'air selon l'art antérieur,
- la figure 2 est une représentation rapprochée en coupe longitudinale d'une turbomachine comportant un circuit de prélèvement d'air selon l'art antérieur,
- la figure 3 est une représentation agrandie du circuit de prélèvement d'air de la figure 2,
- la figure 4 est une représentation en coupe longitudinale d'une turbomachine comportant un circuit de prélèvement d'air selon une forme de réalisation de l'invention,
- la figure 5 est une représentation schématique d'un corps cylindrique de la turbomachine de la figure 4 et
- la figure 6 est une représentation agrandie du circuit de prélèvement d'air de la figure 4.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

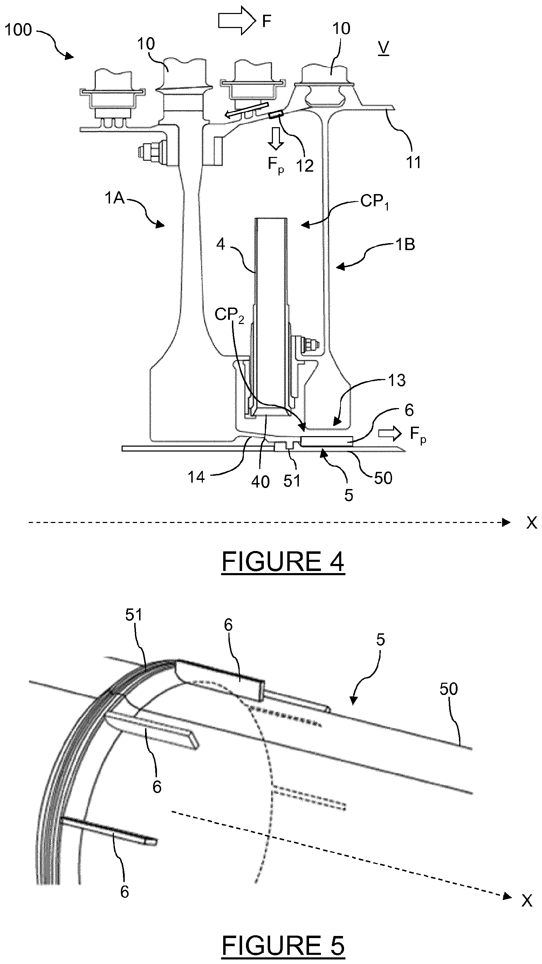

En référence à la figure 4, il est représenté une turbomachine avec un circuit de prélèvement d'air selon une forme de réalisation de l'invention.

Comme présenté préalablement, la turbomachine s'étendant longitudinalement selon un axe X et comporte une veine principale V dans laquelle circule un flux d'air F d'amont en aval. Par la suite, les termes « amont » et « aval » sont définis par rapport à l'axe X orienté d'amont en aval. Les termes « longitudinal » et « radial » sont définis par rapport à l'axe X, le terme radial étant plus précisément défini dans un plan transversal à l'axe X. De même, les termes « intérieur » et « extérieur » sont définis radialement par rapport à l'axe X.

Dans cet exemple, la turbomachine comporte, d'amont en aval, un compresseur 100, une chambre de combustion et une turbine.

De manière connue, en référence à la figure 4, le compresseur 100 comporte un disque de compresseur amont 1A, un disque de compresseur aval 1B et un circuit de prélèvement d'air d'un flux d'air prélevé Fp dans le flux d'air F de la veine principale V. Dans cet exemple de mise en oeuvre, le circuit de prélèvement d'air permet de prélever un flux d'air au niveau du compresseur 100 afin de l'acheminer à la turbine. Néanmoins, il va de soi que le flux d'air prélevé pourrait être acheminé à des lieux différents.

Chaque disque de compresseur 1A, 1B comporte des aubes radiales 10 s'étendant dans la veine principale V pour accélérer le flux d'air F. Le disque de compresseur aval 1B comporte un alésage central 13 et une virole cylindrique 11 comprenant une pluralité d'orifices d'entrée 12 du circuit de prélèvement d'air. La virole cylindrique 11 est reliée au disque de compresseur amont 1A, en particulier, par boulonnage. Les disques de compresseur 1A, 1B sont solidaires en rotation autour de l'axe X. Les orifices d'entrée 12 sont de préférence répartis à la périphérie de la virole cylindrique 11.

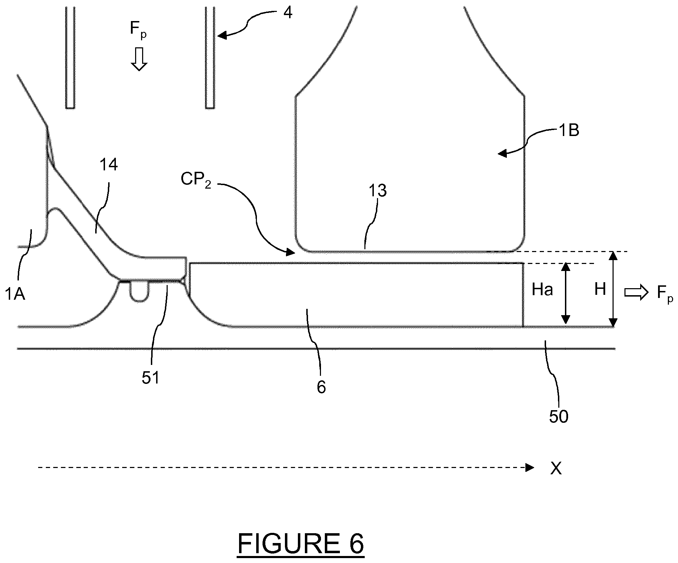

Toujours en référence à la figure 4, la turbomachine comporte un corps cylindrique 5 s'étendant dans l'alésage central 13 du disque de compresseur aval 1B. Un tel corps cylindrique 5 est connu de l'homme du métier sous la désignation de « tirant ». Le corps cylindrique 5 comporte une surface extérieure 50 et un organe de liaison 51 configuré pour être relié au disque de compresseur amont 1A afin de l'entraîner en rotation autour de l'axe X. Dans cet exemple, le disque de compresseur amont 1A comporte un organe de liaison 14, de forme cylindrique, qui s'étend vers l'aval et qui est relié à l'organe liaison 51 du corps cylindrique 5 comme illustré à la figure 6.

En référence à la figure 4, le circuit de prélèvement d'air comporte une portion radiale $CP_1$ dans laquelle est monté une pluralité de tubes de prélèvement d'air 4 et une portion longitudinale $CP_2$ s'étendant entre le corps cylindrique 5 et l'alésage central 13 du disque de compresseur aval 1B. Autrement dit, le flux d'air prélevé $F_p$ peut circuler dans les tubes de prélèvement d'air 4 puis intérieurement à l'alésage central 13 du disque de compresseur aval 1B et extérieurement au corps cylindrique 5.

Dans cet exemple, chaque tube de prélèvement d'air 4 comporte une extrémité intérieure 40 qui est décalé radialement vers l'extérieur par rapport à la portion longitudinale $CP_2$ du circuit de prélèvement d'air.

Selon l'invention, la turbomachine comporte une pluralité d'ailettes 6 s'étendant dans la portion longitudinale $CP_2$ du circuit de prélèvement d'air pour entraîner en rotation le flux d'air prélevé $F_p$. Ainsi, le flux d'air prélevé $F_p$ est entrainé tangentiellement pour limiter les pertes de charge en sortie du tube de prélèvement d'air 4.

En référence aux figures 4 et 5, les ailettes 6 s'étendent radialement vers l'extérieur depuis la surface extérieure 50 du corps cylindrique 5. Les ailettes 6 s'étendent en aval de l'organe de liaison 51 du corps cylindrique 5 et sont réparties à la périphérie du corps cylindrique 5 de manière à entraîner le flux d'air prélevé $F_p$ à la vitesse tangentielle des disques de compresseur 1A, 1B. Les ailettes 6 sont entrainées en rotation autour de l'axe X de la turbomachine. Dans cet exemple, les ailettes 6 s'étendent sensiblement dans le prolongement de l'organe de liaison 14 du disque de compresseur amont 1A. Comme illustré à la figure 6, les surfaces radialement extérieures de l'organes de liaison 14 et des ailettes 6 sont alignées longitudinalement.

Comme illustré à la figure 6 représentant une ailette 6 de manière rapprochée, chaque ailette 6 possède une longueur longitudinale plus grande que la longueur longitudinale de l'alésage 13 du disque de compresseur aval 1B. Ainsi, le flux d'air prélevé Fp est guidé et entraîné de manière optimale dans toute la portion longitudinale $CP_2$ du circuit de prélèvement d'air. Néanmoins, il va de soi qu'une ailette 6 ayant une longueur longitudinale supérieure à 50% de l'alésage 13 pourrait également convenir.

Dans cette forme de réalisation, chaque ailette 6 possède une forme générale rectangulaire définissant un grand côté (ou longueur) s'étendant longitudinalement et un petit côté (ou hauteur) s'étendant radialement par rapport à l'axe X. L'épaisseur de chaque ailette 6 est inférieure à la dimension de son petit côté. De manière préférée, chaque ailette 6 possède une épaisseur constante sur sa longueur.

La portion longitudinale $CP_2$ du circuit de prélèvement d'air possède une hauteur radiale déterminée H, définie entre la surface extérieure 50 du corps cylindrique 5 et la surface intérieure de l'alésage central 13 du disque de compresseur aval 1B. Chaque ailette 6 possède une hauteur radiale Ha définie selon la formule suivante : $Ha > 0.8 * H$. Autrement dit, chaque ailette 6 occupe au moins 80% de la hauteur de la portion longitudinale $CP_2$ du circuit de prélèvement d'air. Une telle caractéristique est particulièrement avantageuse étant donné qu'elle permet de limiter le jeu radial entre les ailettes 6 et l'alésage central 13. De telles ailettes 6 permettent de limiter de manière efficace une accélération tangentielle du flux d'air prélevé $F_p$.

Selon un autre aspect, les orifices d'entrée 12, formés dans la virole cylindrique 11 du disque de compresseur aval 1B, définissent ensemble une section globale d'entrée S1 qui correspond à la somme des sections élémentaires de chaque orifice d'entrée 12. De manière préférée, la portion longitudinale $CP_2$ du circuit de prélèvement d'air possède une section de passage d'air S2 qui est supérieure à deux fois la section globale d'entrée S1. Cela permet avantageusement d'éviter des pertes de charge supplémentaires lors de la circulation du flux d'air prélevé $F_p$ entre les ailettes 6.

De manière avantageuse, grâce à l'invention, les pertes de charge dans le circuit de prélèvement d'air peuvent être réduites de manière importante sans modification structurelle importante. En effet, seules des ailettes mobiles 6 sont ajoutées à la turbomachine sans impacter les autres éléments de la turbomachine. La position et les dimensions des ailettes 6 sont déterminées de manière judicieuse pour réduire de manière optimale les pertes de charge sans pour autant impacter les performances du circuit de prélèvement d'air. L'ajout d'ailettes 6 sur la surface extérieure 50 du corps cylindrique 5 est simple à réaliser.

Selon un autre aspect de l'invention, les ailettes 6 s'étendent radialement vers l'intérieur depuis une surface intérieure de l'alésage central 13 du disque de compresseur aval 1B. Autrement dit, les ailettes 6 ne sont plus formées extérieurement sur le corps cylindrique 5 mais intérieurement à l'alésage central 13 du disque de compresseur aval 1B. De telles ailettes 6 permettent avantageusement d'entraîner le flux d'air prélevé $F_P$ tangentiellement dans la portion longitudinale $CP_2$ du circuit de prélèvement d'air pour limiter les pertes de charge. Bien que cette solution technique soit fonctionnelle, il est néanmoins préféré de former les ailettes 6 sur le corps cylindrique 5 afin de limiter les modifications structurelles.

Un exemple de mise en oeuvre d'un procédé de prélèvement d'un flux d'air dans une turbomachine va être dorénavant présenté en référence à la figure 4.

Le procédé comporte une étape de circulation d'un flux d'air prélevé Fp de la veine principale V à la portion radiale $CP_1$ du circuit de prélèvement d'air via les orifices d'entrée 12 de la virole 11. Puis, le procédé comporte une étape de circulation du flux d'air prélevé Fp de la portion radiale $CP_1$ du circuit de prélèvement d'air à la portion longitudinale $CP_2$ du circuit de prélèvement d'air via le tube de prélèvement d'air 4. Le procédé comporte en outre une étape d'entrainement en rotation du flux d'air prélevé Fp dans la portion longitudinale $CP_2$ du circuit de prélèvement d'air par la pluralité d'ailettes 6. Lors de la rotation des ailettes 6 autour de l'axe X, le flux d'air prélevé $F_p$ est entraîné à la vitesse tangentielle des disques de compresseur 1A, 1B. Les pertes de charge sont alors grandement réduites.

## Revendications

1. Turbomachine s'étendant longitudinalement selon un axe X et comportant une veine principale (V) dans laquelle circule un flux d'air (F) d'amont en aval, la turbomachine comportant un compresseur (100) comportant au moins un disque de compresseur amont (1A), au moins un disque de compresseur aval (1B) et un circuit de prélèvement d'air d'un flux d'air prélevé (Fp) dans la veine principale (V), le disque de compresseur aval (1B) comportant un alésage central (13) et une virole cylindrique (11) comprenant une pluralité d'orifices d'entrée (12) du circuit de prélèvement d'air, la turbomachine comportant un corps cylindrique (5) s'étendant dans l'alésage central (13) du disque de compresseur aval (1B) et relié solidairement au disque de compresseur amont (1A), le circuit de prélèvement d'air comportant une portion radiale ($CP_1$), s'étendant entre le disque de compresseur amont (1A) et le disque de compresseur aval (1B), dans laquelle est monté au moins un tube de prélèvement d'air (4) et une portion longitudinale ($CP_2$) s'étendant entre le corps cylindrique (5) et l'alésage central (13), **turbomachine caractérisée par le fait qu'elle** comporte une pluralité d'ailettes (6) s'étendant dans la portion longitudinale ($CP_2$)

du circuit de prélèvement d'air, configurées pour être entrainées en rotation autour de l'axe X, pour entraîner en rotation le flux d'air prélevé ($F_P$).

2. Turbomachine selon la revendication 1, dans laquelle le corps cylindrique (5) comporte la pluralité d'ailettes (6).

3. Turbomachine selon l'une des revendications 1 à 2, dans laquelle la portion longitudinale ($CP_2$) du circuit de prélèvement d'air ayant une hauteur radiale déterminée H, chaque ailette (6) possède une hauteur radiale Ha définie selon la formule suivante :

$$Ha > 0.8 * H$$

4. Turbomachine selon l'une des revendications 1 à 3, dans laquelle la pluralité d'orifices d'entrée (12) définit une section globale d'entrée S1, la portion longitudinale ($CP_2$) du circuit de prélèvement d'air possède une section de passage d'air S2 supérieure à deux fois la section d'entrée S1.

5. Turbomachine selon l'une des revendications 1 à 4, dans laquelle la pluralité d'ailettes (6) est répartie à la périphérie du corps cylindrique (5).

6. Turbomachine selon l'une des revendications 1 à 5, dans laquelle le corps cylindrique (5) comporte un organe de liaison (51) relié au disque de compresseur amont (1A).

7. Turbomachine selon la revendication 6, dans laquelle la pluralité d'ailettes (6) s'étend en aval de l'organe de liaison (51) du corps cylindrique (5).

8. Turbomachine selon l'une des revendications 1 à 7, dans laquelle, le disque de compresseur amont (1A) comportant un organe de liaison (14) relié au corps cylindrique (5), la pluralité d'ailettes (6) s'étend sensiblement dans le prolongement de l'organe de liaison (14) du disque de compresseur amont (1A).

9. Turbomachine selon l'une des revendications 1 à 8, dans laquelle, le tube de prélèvement d'air (4) comporte une extrémité radialement intérieure (4) décalée radialement vers l'extérieur par rapport à l'alésage central (13) du disque de compresseur aval (1B).

10. Procédé de prélèvement d'un flux d'air dans une turbomachine selon l'une des revendications 1 à 9, le procédé comprenant :

a. une étape de circulation d'un flux d'air prélevé ($F_p$) de la veine principale (V) à la portion radiale ($CP_1$) du circuit de prélèvement d'air,
b. une étape de circulation du flux d'air prélevé ($F_p$) de la portion radiale ($CP_1$) du circuit de prélèvement d'air à la portion longitudinale ($CP_2$) du circuit de prélèvement d'air et
c. une étape d'entrainement en rotation du flux d'air prélevé ($F_p$) dans la portion longitudinale ($CP_2$) du circuit de prélèvement d'air par la pluralité d'ailettes (6).

**Patentansprüche**

1. Turbinentriebwerk, das sich gemäß einer Achse X längs erstreckt und einen Hauptkanal (V) aufweist, in dem ein Luftstrom (F) von stromaufwärts nach stromabwärts zirkuliert, wobei das Turbinentriebwerk einen Kompressor (100) aufweist, der mindestens eine stromaufwärtige Kompressorscheibe (1A), mindestens eine stromabwärtige Kompressorscheibe (1B) und einen Luftsammelkreis eines gesammelten Luftstroms (Fp) im Hauptkanal (V) aufweist, wobei die stromabwärtige Kompressorscheibe (1B) eine zentrale Bohrung (13) und ein zylindrisches Gehäuse (11) aufweist, der eine Vielzahl von Einlassöffnungen (12) des Luftsammelkreises umfasst, wobei das Turbinentriebwerk einen zylindrischen Körper (5) aufweist, der sich in der zentralen Bohrung (13) der stromabwärtigen Kompressorscheibe (1B) erstreckt und mit der stromaufwärtigen Kompressorscheibe (1A) fest verbunden ist, wobei der Luftsammelkreis einen radialen Abschnitt ($CP_1$) aufweist, der sich zwischen der stromaufwärtigen Kompressorscheibe (1A) und der stromabwärtigen Kompressorscheibe (1B) erstreckt, in dem mindestens ein Luftsammelrohr (4) angebracht ist und einen länglichen Abschnitt ($CP_2$), der sich zwischen dem zylindrischen Körper (5) und der zentralen Bohrung (13) erstreckt, wobei das Turbinentriebwerk **dadurch gekennzeichnet ist, dass** es eine Vielzahl von Rippen (6) aufweist, die sich im länglichen Abschnitt ($CP_2$) des Luftsammelkreises erstrecken, die ausgelegt sind, um um die Achse X rotatorisch angetrieben zu sein, um den gesammelten Luftstrom ($F_P$) rotatorisch anzutreiben.

2. Turbinentriebwerk nach Anspruch 1, wobei der zylindrische Körper (5) die Vielzahl von Rippen (6) aufweist.

3. Turbinentriebwerk nach einem der Ansprüche 1 bis 2, wobei der längliche Abschnitt ($CP_2$) des Luftsammelkreises eine bestimmte radiale Höhe H hat, wobei jede Rippe (6) eine radiale Höhe Ha besitzt, definiert gemäß der folgenden Formel:

$$Ha > 0{,}8 * H$$

4. Turbinentriebwerk nach einem der Ansprüche 1 bis 3, wobei die Vielzahl von Einlassöffnungen (12) einen globalen Eintrittsquerschnitt S1 definiert, wobei der längliche Abschnitt (CP$_2$) des Luftsammelkreises einen Luftdurchgangsquerschnitt S2 besitzt, der größer als zweimal der Eintrittsquerschnitt S1 ist.

5.  Turbinentriebwerk nach einem der Ansprüche 1 bis 4, wobei die Vielzahl von Rippen (6) auf dem Umfang des zylindrischen Körpers (5) verteilt ist.

6.  Turbinentriebwerk nach einem der Ansprüche 1 bis 5, wobei der zylindrische Körper (5) ein Verbindungsorgan (51) aufweist, das mit der stromaufwärtigen Kompressorscheibe (1A) verbunden ist.

7.  Turbinentriebwerk nach Anspruch 6, wobei sich die Vielzahl von Rippen (6) zu dem Verbindungsorgan (51) des zylindrischen Körpers (5) stromabwärts erstreckt.

8.  Turbinentriebwerk nach einem der Ansprüche 1 bis 7, wobei, wobei die stromaufwärtige Kompressorscheibe (1A) ein Verbindungsorgan (14) aufweist, das mit dem zylindrischen Körper (5) verbunden ist, sich die Vielzahl von Rippen (6) etwa in der Verlängerung des Verbindungsorgans (14) der stromaufwärtigen Kompressorscheibe (1A) erstreckt.

9.  Turbinentriebwerk nach einem der Ansprüche 1 bis 8, wobei das Luftsammelrohr (4) ein radial inneres Ende (4) aufweist, das radial nach außen in Bezug auf die zentrale Bohrung (13) der stromabwärtigen Kompressorscheibe (1B) versetzt ist.

10. Verfahren zum Sammeln eines Luftstroms in einem Turbinentriebwerk nach einem der Ansprüche 1 bis 9, wobei das Verfahren aufweist:

   a. einen Zirkulationsschritt eines gesammelten Luftstroms (F$_p$) vom Hauptkanal (V) zum radialen Abschnitt (CP$_1$) des Luftsammelkreises,
   b. einen Zirkulationsschritt des gesammelten Luftstroms (F$_p$) vom radialen Abschnitt (CP$_1$) des Luftsammelkreises zum länglichen Abschnitt (CP$_2$) des Luftsammelkreises, und
   c. einen Rotationsantriebsschritt des gesammelten Luftstroms (F$_p$) im länglichen Abschnitt (CP$_2$) des Luftsammelkreises durch die Vielzahl von Rippen (6).

**Claims**

1.  A turbomachine extending longitudinally along an axis X and comprising a main stream (V) in which an air flow (F) circulates from upstream to downstream, the turbomachine comprising a compressor (100) comprising at least one upstream compressor disk (1A), at least one downstream compressor disk (1B) and an air bleed circuit of a bleed air flow (Fp) in the main stream (V), the downstream compressor disk (1B) comprising a central bore (13) and a cylindrical shell (11) comprising a plurality of inlet openings (12) of the air bleed circuit, the turbomachine comprising a cylindrical body (5) extending in the central bore (13) of the downstream compressor disk (1B) and integrally connected to the upstream compressor disk (1A), the air bleed circuit comprising a radial portion (CP$_1$), extending between the upstream compressor disk (1A) and the downstream compressor disk (1B), wherein at least one air bleed tube (4) and a longitudinal portion (CP$_2$) extending between the cylindrical body (5) and the central bore (13) are mounted, the turbomachine being **characterised in that** it comprises a plurality of fins (6) extending in the longitudinal portion (CP$_2$) of the air bleed circuit, configured to be rotatably driven about the axis X, to rotatably drive the bleed air flow (F$_P$).

2.  The turbomachine according to claim 1, wherein the cylindrical body (5) comprises the plurality of fins (6).

3.  The turbomachine according to one of claims 1 to 2, wherein, with the longitudinal portion (CP$_2$) of the air bleed circuit comprising a determined radial height H, each fin (6) comprises a radial height Ha defined according to the following formula:

$$Ha > 0.8 * H$$

4.  The turbomachine according to one of claims 1 to 3, wherein the plurality of inlet openings (12) defines an overall inlet cross-section area S1, the longitudinal portion (CP$_2$) of the air bleed circuit comprises an air passage cross-section area S2 greater than twice the inlet cross-section area S1.

5.  The turbomachine according to one of claims 1 to 4, wherein the plurality of fins (6) is distributed at the periphery of the cylindrical body (5).

6.  The turbomachine according to one of claims 1 to 5, wherein the cylindrical body (5) comprises a connection member (51) connected to the upstream compressor disk (1A).

7.  The turbomachine according to claim 6, wherein the plurality of fins (6) extends downstream of the connection member (51) of the cylindrical body (5).

8.  The turbomachine according to one of claims 1 to 7, wherein, the upstream compressor disk (1A) comprising a connection member (14) connected to the cylindrical body (5), the plurality of fins (6) extends substantially as an extension of the connection member (14) of the upstream compressor disk (1A).

9. The turbomachine according to one of claims 1 to 8, wherein, the air bleed tube (4) comprises a radially internal end (4) radially offset outwardly from the central bore (13) of the downstream compressor disk (1B).

10. A method for bleeding an air flow in a turbomachine according to one of claims 1 to 9, the method comprising:

> a. a step of circulating a bleed air flow ($F_P$) from the main stream (V) to the radial portion ($CP_1$) of the air bleed circuit,
> b. a step of circulating the bleed air flow ($F_P$) from the radial portion ($CP_1$) of the air bleed circuit to the longitudinal portion ($CP_2$) of the air bleed circuit and
> c. a step of rotatably driving the bleed air flow ($F_P$) into the longitudinal portion ($CP_2$) of the air bleed circuit by the plurality of fins (6).

**FIGURE 1**

FIGURE 2

FIGURE 3

FIGURE 4

FIGURE 5

FIGURE 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1262630 A1

- EP 231994 A1